# EUROPEAN PATENT SPECIFICATION

(11) **EP 1 355 399 B1**
(45) Date of publication and mention of the grant of the patent: **25.11.2009**
(21) Application number: 02252772.5
(22) Date of filing: 19.04.2002
(51) Int. Cl.: H02G 3/12

(54) **Accessory mounting**
Zubehörmontage
Accessoire de montage

(43) Date of publication of application: 22.10.2003
(73) Proprietor: C & C MARSHALL LIMITED, ST. Leonards-on-Sea, East Sussex TN38 1YJ (GB)
(72) Inventor: Softley, Andrew John Kenneth, St Leonards TN37 7EF (GB)
(74) Representative: Lamb, Martin John Carstairs

(56) References cited:
- DE-U- 7 048 119
- GB-A- 2 015 268
- US-A- 4 634 015

## Description

The present invention relates to to a method of manufacturing the accessory mounting.

Service distribution ducting, for example for distributing electrical and communications services, is widely used within buildings, for example within offices or other working spaces. Such ducting is sometimes called trunking.

By way of example, GB 2015208 and DE 7048119 disclose trunking components for use in electrical distribution systems.

Such ducting typically comprises a longitudinally extending channel of indefinite length defined by a longitudinally extending floor member and at least one (usually two) longitudinally extending wall member projecting from the floor member. Various longitudinally extending mounting means may be provided for supporting within the channel longitudinally extending electrical conductors (commonly called busbars) or electrical or optical communication cables.

Access to electrical power or communications can be provided at any selected point along the length of the ducting by accessories, such as electrical sockets, communication sockets, data take-offs and the like, which engage with respective conductors or cables located within the ducting. Such accessories typically comprise accessory mountings as part of their design or are fixed in accessory mountings which provide a rigid support for the accessory and which can be conveniently engaged at any desired point in the ducting.

Lid members may be provided to give a flush surface to the ducting between accessories.

The ducting is typically mounted on walls extending in a horizontal direction, but it may be mounted extending in any suitable direction, including vertically.

An accessory mounting may be configured to support a plurality of similar or different accessories, if necessary, for example double electrical power sockets.

Typically, a manufacturer may offer several types of service distribution ducting, which may differ from one another in height (i.e. the distance by which they project from the surface on which they are mounted). Relatively high ducting may be desirable to provide a rigid housing for a large number of conductors or cables. However, in some circumstances, ducting which projects by a smaller distance from the surface on which it is mounted may be desired for aesthetic or practical reasons.

It has been the practice in the past to provide completely separate ranges of components for different ducting systems. For example, the accessories, accessory mountings, ducting and other equipment for a first size of ducting system may all be different from the respective accessories, accessory mountings and ducting for a different size of ducting system.

The present inventors have realised that it may be possible to simplify the range of components by providing an accessory mounting which may be used in at least two different sizes of ducting system. In particular, the present inventors have realised that an accessory mounting can be provided which can be used to mount large or small accessories, in shallow or deep ducting systems.

An adjustable electrical outlet box which is mountable within the walls of a building is disclosed for example in US 4634015. In this apparatus, two mounting parts are telescopically mounted with respect to one another, their distance apart being fixed by screws.

A similar arrangement is shown in US5042673.

An accessory mounting for use in mounting an accessory to a wall is shown in EP-B-0468869. In this disclosure, there is a front plate and a back plate which is slidably mounted with respect to the front plate, the extent of the back plate from the front being adjustable by a ratchet mechanism. In this disclosure, the accessory is mounted with respect to the inner plate. However, this is found to be impractical, because a very large number of accessories are fixed by fixing means located at the face plate of the accessory, which will face out of the system. In the apparatus of EP-B-04688869, all that can be achieved is to vary the depth of the face plate of the accessory below the face plate.

The present inventors have set out to provide a design of accessory mounting for use in service distribution ducting which allows different sizes of accessory to be accommodated in different sizes of ducting but which will allow the different sizes of accessory to mounted with their face plates in the same position. The present inventors have realised that this can be achieved if the accessory mounting has a first mounting part and a second mounting part telescopically mounted with respect to the first mounting part, the first mounting part comprising means both for engaging ducting and for engaging the accessory so that the accessory is always fixed in the same position with respect to the ducting, the position of the first mounting part with respect to the second mounting part being variable by mean of a ratchet. In this way, rapid and easy installation of accessories at a standard face plate position can be obtained.

Accordingly, the present invention provides:
an accessory mounting being of the type for use in service distribution ducting, the method comprising a method of manufacturing the following steps:
   providing a first mounting part having a first opening and a second opening, and wall members extending between the first and second openings to define a first enclosed volume,
   providing the first mounting part further comprising means adjacent to the first opening for engaging service distribution ducting and means for engaging an accessory, to thereby fix the accessory with respect to the service distribution ducting.
   a second mounting part having an opening and wall member extending from the opening to define a second enclosed volume, wherein the walls and opening of the second mounting part are receivable in the second opening of the first mounting part, or the walls and the second opening of the first mounting part are receivable in the opening of the second mounting part, so that the first and second included volumes are in communication,
   the second mounting part being movable with respect to the first mounting part so that the distance between the second mounting part and the first opening is variable, characterised in that the second mounting part is provided for substantially enclosing the bottom of the accessory, and a ratchet mechanism is provided between the first mounting part and the second mounting part, and in that the method comprises manufacturing the first mounting part and the second mounting part, separately, from thermoplastic material by molding, forming or casting at an elevated temperature, allowing the first and second mounting parts to cool to a temperature which is above ambient temperature, assembling the first and second mounting parts together and allowing the accessory mounting to cool to ambient temperature.

Considerable problems can be experienced with screw means for adjusting the position of telescoping parts of an accessory mounting. In particular, if a single screw were provided, one part of the box would be relatively easily moved with respect to another part but corresponding parts of the structure on the opposite side of the box would twist or jam. If two screws are provided, both screws have to be advanced incrementally together, which can be very complex. There is also a potential problem if the box has been incorrectly adjusted. In particular, if the box has been made too small to accommodate an accessory, the user will have to adjust it by trial and error until it is the right size.

The use of a ratchet mechanism provides a number of advantages. In particular, the ratchet mechanism is very easy to form by a simple molding operation. A plurality of ratchet surfaces of relatively large extent may be provided to provide secure and a balanced mounting of the box. Adjusting the extent of the box to accommodate accessories of different size is easy. The user may even use the accessory to push the box to the relevant size in a simple movement.

The accessory box made by the present invention may find application in any area where the depth available for an accessory mounting is limited.

The accessory mounting may be used with ducting of any suitable type. It may be made of cast, moulded, formed or extruded material, for example thermoplastic material, or metal, particularly uPVC or aluminium.

Suitably, the ducting comprises members projecting from the floor member for engaging with cables, conductors, busbars, optical fibres etc. The ducting may comprise means defining additional or subsidiary longitudinally extending channels. Suitably, it comprises lid means for closing the channels. Suitable ducting is described for example in GB-A-2253096 and GB-A-2282278.

The accessory mounting itself is suitably made of materials such as thermoplastic or metal, particularly preferably aluminium, ABS, uPVC or steel. The accessory mounting is suitably formed by pressing, forming or moulding the material. The material is suitably of thickness in the range 0.5mm - 4mm, more preferably 1.5 - 3mm, most preferably 1.8 - 2.5mm. Suitably, the first mounting part and the second mounting part are formed of the same material, though they may be made of different materials. The accessory mounting may be used to mount any suitable accessory, for example an electrical socket or sockets, communications terminals, data inputs etc.

The mounting parts may be variably mounted with respect to one another in any suitable way. They may slide with respect to one another. Preferably, the first mounting part comprises at least one sliding surface and the second mounting part comprises a corresponding sliding surface for sliding contact with the sliding surface of the first mounting part. Preferably, there are a plurality of sliding surfaces. It is particularly preferred that the sliding surfaces comprise at least one wall of the first mounting part and at least one wall of the second mounting part.

In the first mounting part and the second mounting part, at least two of the wall members of each part are suitably parallel to one another. This will allow the first and second mounting parts to be mounted together so that the parallel walls of the second mounting part lie parallel to and adjacent the parallel walls of the first mounting part. This allows a particularly secure mounting of the mounting parts together.

Preferably, the first mounting part has a first pair of parallel surfaces and a second pair of parallel surfaces, the second mounting part also having a first pair of parallel surfaces and a second pair of parallel surfaces, the first second mounting parts being of similar shape but different size so that, in use, each surface of the first mounting part is in sliding contact with a corresponding surface of the second mounting part.

Preferably, at least the sliding surfaces of the mounting parts are flat planar surfaces. Where each mounting part comprises parallel wall members, these parallel wall members are preferably flat planar surfaces. Preferably, each mounting part comprises four flat planar wall members.

Each mounting part may be in the form of a square or rectangular prism whose parallel walls are defined by the wall members. This is a particularly simple shape to construct.

This also allows the accessory mounting to be movably placed in trunking of the type described above.

The first and second openings of the first mounting part are suitably of similar shape. They may be of substantially the same size or one may be smaller than the other. For example the first opening may be slightly smaller than the second opening.

The second mounting part suitably has a closed face opposite its opening, so that it defines an open top box.

Together, the first and second enclosed volumes define the space in which an accessory may be mounted. Using the accessory mounting of the invention, the total enclosed volume may be varied to suit the size of the accessory to be mounted.

The first mounting part comprises means adjacent to the first opening for engaging service distribution ducting. Such means for engaging the ducting are very well known and can be devised by the person skilled in the art. The means for engaging the ducting may be substantially as shown for example in GB-A- 2253096 and GB-A-2282278.
Preferably, the means for engaging the ducting are mounted at substantially the same level as the first opening. Preferably, the means for engaging the ducting extend from the wall members of the first mounting part at the level of the first opening. Preferably, the means for engaging the ducting extend outside the first opening.

The first mounting part will further comprise means for engaging an accessory. Many accessories comprise engagement parts of a design which is set by national or international standards. For example, electrical sockets are, according to the British Standard, to be fixed in place by screws of a standard size passing through holes in the face plate of the socket, which holes are a fixed distance apart. This is to ensure interchangability of sockets and mountings produced by different manufacturers. Accordingly, the means for engaging the accessory may be effectively defined by the relevant standard. For example, in order to allow a socket to be engaged, the first mounting part may comprise a pair of bores fixed at a distance from one another set by the relevant standard, for receiving fixing screws of an accessory. These bores may be formed in the wall members of the box, if the wall members are located at an appropriate distance from one another. Alternatively, at least one screw engaging structure or screw post may be provided located at a position displaced from an adjacent wall member and joined to the adjacent wall member by connecting means. Preferably, the connecting means extend over substantially the whole length of the screw engaging structures, to give rigid support and sound fixing for the accessory. In order to prevent interference with the sliding movement between the mounting parts, a slot may be provided in the second mounting part, the walls of the slot being slidable past the connecting means.

Using the first mounting part, a wide range of accessories may be fixed in service distribution ducting in such a way that the contact part of the accessory which the user will need to access in use, is fixed at substantially the same position in a wide variety of different types of ducting and for a wide variety of types of accessory.

This is achieved at least in the first respect by the accessory mounting of the present invention which is variable in depth. The accessory mounting may be made engagable with a wide of range of different types of service provision ducting. This may be achieved by forming the means for engaging the ducting as a separate part releasably fixable to the first mounting part. The first mounting part may be configured so that it is engagable with a plurality of different types of means for engaging the service provision ducting. In a particular preferred embodiment, the first mounting part comprises means for engaging the ducting and, separately, means for engaging a second type of means for engaging the ducting. In this way, the first mounting part may be engaged within a frame within which an accessory is received. Alternatively it can be mounted directly into the service provision ducting, a face plate being provided for engaging over the accessory. In this way, an accessory mounting may be provided which is useable in a wide variety of applications.
The ratchet means between the first mounting part and the second mounting part may be formed in a manner well known to the person skilled in the art. For example, there may be at least one set of formations extending in succession to one another away from a respective opening of a mounting part. This set of formations may be formed in the first or second mounting part. A corresponding formation or set of formations may be provided on the other of the first or second mounting directed in a direction such that, when in position, the formations engage with one another. The respective formations may comprise indentations and projections, or two sets of projections. Preferably, at least one set of formations comprises linearly extending ridges. This provides a large contact area allowing a strong connection. There may be more than one set of formations. For example, the formations may be provided on a pair of opposed parallel walls of the first and second mounting part. Preferably, at least one set of formations extend over a distance of at least one centimetre, preferably at least two centimetres, to provide a secure a grip.

Preferably, there are substantially no means on the second mounting part for fixing to the accessory. The purpose of the second mounting part is preferably to substantially enclose the bottom of the accessory.

As noted above, the first mounting part may comprise at least one screw engaging means projecting from an adjacent wall member of the first mounting part and connected thereto by a connecting member. Preferably, there are at least two screw engaging means. In a particularly preferred embodiment, there are four screw engaging means, each located on a respective wall member. If the wall member to which the screw engaging means is connected comprises a flat planar wall and the second mounting part comprises a corresponding planar wall to slide over the flat planar wall of the first mounting part, on the inside thereof, there could be problem due to interference of the mounting means of the screw engaging means and the flat wall of the second mounting part. To overcome this, a longitudinally extending slot may be formed in the flat wall of the second mounting part at a point which corresponds to the mounting means of the screw engaging means.

It is preferred that the second mounting means is slidably received inside the second opening of the first mounting means. In this way, when the accessory mounting is located in ducting, a user will still be able to adjust the position of the second mounting part with respect the first mounting part by reaching into the accessory mounting and pushing or pulling on the walls of the second mounting part.

It is known in the art of accessory boxes to provide knock-out portions in the walls of the accessory box. In use, in order to allow access by conductors, cables or other equipment within the ducting to the accessory in the accessory box, at least one knock-out portion may be removed to open a hole in the side.

A knock-out portion typically comprises a zone of a wall member which is partly divided from the rest of wall member by slots, at least one narrow connecting portion being provided located between the slots, connecting the knock-out portion to the wall member. Suitably, there are two slots and two connecting portions.

The second mounting part preferably comprises at least one knock-out portion. It has been found that this knock- portion tends to be obscured if the second mounting part is fixed at its shortest distance from the first opening of the first mounting part. To overcome this, a corresponding second knock-out portion is suitably provided in a part of the first mounting part which coincides with the knock-out portion of the second mounting part when the second mounting part is in a retracted position. In this way, access to the interior of the box may be achieved by removing both knock-out portions.

If the service provision ducting is to be used to carry communications cables, particularly fibre optic cables, it may be necessary to design the entry into the accessory mounting from the service provision ducting in such a way that the cables will not be bent so that they have a radius of curvature less than a given amount, which is normally from 25mm to 75mm, with 50mm being typical. The actual value will be determined by the physical properties of the cable and is normally specified by the manufacturer . Accordingly, the walls of the accessory mounting may comprise openings through which cables may pass, curved surfaces extending from the openings, the radius of curvature of the curved surfaces being not less than a value falling in the range 25mm - 75mm.

Depth measurement marks may be provided for assessing the depth to which the accessory mounting has been adjusted. For example a plurality of depth measurements may be formed on the outer surface of whichever of the mounting parts slides inside the other one, so that the user can see the adjustment position by observing which marks remain visible. Alternatively, the adjustment position could be assessed by depth marks formed on the inside of which ever of the mounting parts accepts the other mounting part within it. The marks may comprise a depth reading, indicating the total depth to which the accessory mounting has been adjusted.

Retaining means may be provided for preventing the first mounting part and the second mounting part being separated from one another. For example, co-operating stop members may be provided on the first and second mounting part which prevent the mounting parts being slid out of engagement with one another.

The surfaces of the accessory mounting may be treated with electromagnetic screening material. This material may be applied to all or part of the surfaces of the first mounting part, second mounting part or both of them. Preferably, it is applied to substantially all of the surface of both mounting parts. Suitably, the electromagnetic screening material comprises a metal such as copper or aluminium. Suitably, it is applied by vapour deposition.

As described above, wherein the first mounting part comprises a screw engaging structure such as a screw post located at a position displaced from an adjacent wall member and joined to the adjacent wall member by connecting means, a slot being provided in the second mounting part, the walls of the slot being engagable past the connecting means, there is danger that the slot could provide a breach in the electromagnetic screening surface, reducing its effectiveness. In a preferred embodiment at least part of the slot is filled with a thin web of material (suitably of thickness in the range .1-.5mm), coated with electromagnetic screening material. This web may be left in place by an installer if it is desired to provide an accessory mounting which is relatively deep. However, if the accessory mounting is to be made smaller, the web may be cut away by a suitable cutting tool such as a knife.

Preferably, the sizes of the first and second mounting part are carefully adjusted to allow smooth sliding between these two parts. Preferably, the tolerance of the respective sliding surfaces of each part is relatively small.

### BRIEF DESCRIPTION OF THE DRAWINGS

An accessory mounting of the present invention will further described by way of example only with reference to the accompanying drawings in which:
Figure 1 is a sketch isometric view of a first accessory mounting , in assembled form.
Figure 2 is a sketch isometric view of the first accessory mounting with the first and second mounting parts separated.
Figure 3 is a sketch isometric view of a second accessory mounting, in assembled form,
Figure 4 is a sketch isometric view of the second accessory mounting with the first and second mounting parts separated.
Figure 5 is an end view of a third accessory mounting , with the second mounting part extended with respect to the first mounting part.
Figure 6 is a schematic end view of the third accessory mounting , with the second mounting part retracted with respect to the first mounting part.
Figure 7 is a side view of the first mounting part of a fourth accessory mounting.
Figure 8 is an isometric view from above of the first mounting part of figure 7.
Figure 9 is an end view of the first mounting part of figure 7.
Figure 10 is an isometric view of the second mounting part of the fourth accessory mounting, for engagement with the first mounting part of figure 7.
Figure 11 is an isometric view from underneath of the second mounting part of figure 10.
Figure 12 is an end view of the second mounting part of figure 10.
Figure 13 shows the opposite end view of the second mounting part of figure 10.
Figure 14 shows an end view of first mounting part of a fifth accessory mounting.
Figure 15 is an isometric view from above of the mounting part of figure 14.
Figure 16 is a side view of the mounting part of figure 14.
Figure 17 is a top view of the mounting part of figure 14.
Figure 18 is an isometric view from above of a second mounting part according to the fifth accessory mounting, for engagement with the first mounting part of figure 14.
Figure 19 is an end view of the second mounting part of figure 18.
Figure 20 shows the opposite end view of the mounting part of figure 18.
Figure 21 is a side view of the mounting part of figure 18.
Figure 22 is an isometric view from underneath of the mounting part of figure 18.

### DETAILED DESCRIPTION OF THE DRAWINGS

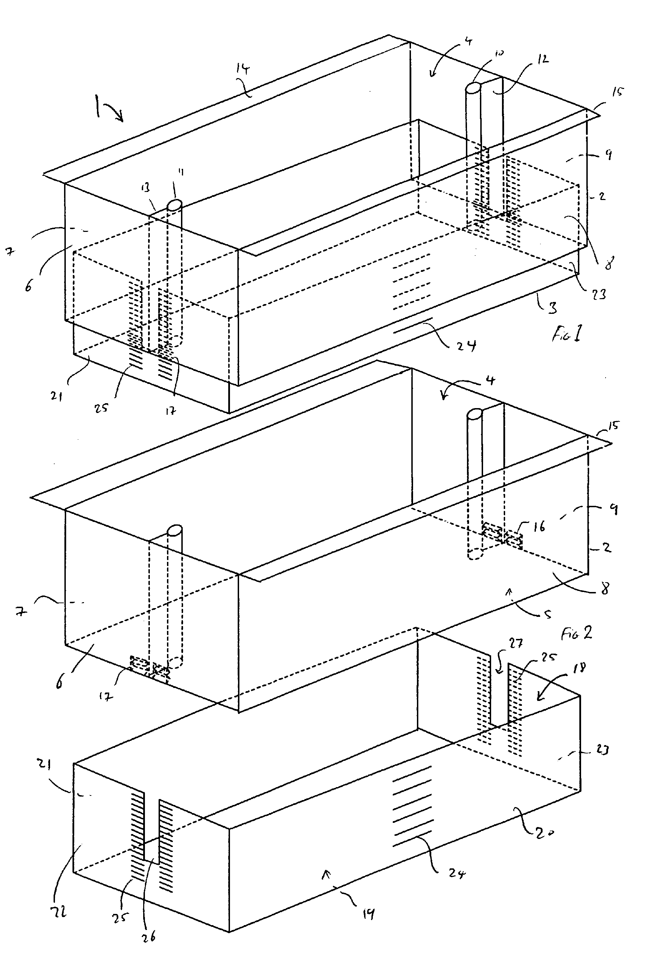

Figure 1 is a sketch isometric view of a first accessory mounting which can be manufactured by the method of the invention.

Details of the construction of an accessory box which would be well known to the person skilled in the art, such as screw mountings, clips for engaging ducting, strengthening ribs, weakenings for allowing the box to be flexed etc are omitted for clarity. The accessory mounting, generally designated 1, comprises a first mounting part 2 and a second mounting part 3. The first mounting part 2 comprises a first opening 4 at the top and a second opening 5 at the bottom. The first and second openings 4 and 5 are located in opposed faces. The first mounting part 2 is formed as a short rectangular prism. The first mounting part 2 comprises four wall members 6, 7, 8, 9 which, together with the openings, define a first enclosed volume.

The first mounting part 2 further comprises a pair of screw posts 10,11, each for engaging a screw for fixing an accessory to the first mounting part. The screw posts 10 and 11 are joined to the wall members 9 and 6 respectively by connecting parts 12 and 13 respectively.

The first mounting part 2 is provided with means for engaging service distribution ducting. The means for engaging the ducting is shown schematically as a pair of flanges 14 and 15. The detailed design of means for engaging the ducting will depend upon the type of ducting to be engaged and will be well known to the person skilled in the art.

Finally, the first mounting part 2 comprises a pair of ratchet faces 16 and 17 located on the inward facing sides of the wall members 6 and 9 adjacent the connecting parts 12 and 13.

The second mounting part 3 comprises an opening 18. Opposite the opening 18 there is a closed face 19 defining a floor of the accessory mounting. The second mounting part 3 further comprises wall members 20, 21, 22 and 23. Together, the first opening 18, closed face 19 and the wall members 20-23 define a rectangular section prism.

The external dimensions of the second mounting part 3 are precisely configured so that the second mounting part 3 fits within the first mounting part 2.

In particular, the second mounting part 3 and the first mounting part 2 are similar in shape, the external dimensions of the second mounting part 3 being smaller than the internal dimensions of the first mounting part 2 (not taking into account the means for engaging the accessory) by a fixed amount. For example, when placed together, the space between the walls of the first mounting part and the second part 3 may be less than 1mm. This gives a snug and secure fit.

The second mounting part 3 further comprises two sets of ratchet surfaces 25. Each set of ratchet surface 25 comprises a plurality of ridges extending in the width direction of the accessory box 1. When in position in the first mounting part 2, the ridges of the ratchet means 16 and 17 lie parallel to and inter-engaged with the ridges of the ratchet faces 25 of the second mounting part 2.

The second mounting part 3 further comprises of set of depth marks 24 formed on the wall member 20 so that a user can see the adjustment position of the second mounting part with respect to the first mounting part.

The wall members 23 and 22 of the second mounting part 3 further comprise notches 26, 27 extending in the depth direction of the accessory mounting 1 between the ridges of the ratchet surfaces 24. In use, the notches 26, 27 engage around the respective connecting means 13, 12 of the first mounting part so that interference between these two structures is avoided.
In use, the second mounting part 3 can be inserted into the bottom of the first mounting part 2 through the second opening 5 until the respective ratchet means 16 and 17 engage the ratchet surfaces 25. By the application of moderate pressure, the second mounting part may be adjusted to a position within the second mounting part as selected. Once in position, the engagement between the ratchet means holds the mounting parts in position. Slight resilience in the walls 21, 20 and 8 and 7 allows the ratchet ridges to move over one another to allow adjustment of the ratchet means.

An accessory can be engaged with the accessory mounting 1 using screws passing through the accessory and into the screw posts 10 and 11. The position of the second mounting part 3 in the first mounting part 2 will be adjusted so that the depth is sufficient to accommodate the accessory. In this way, a large accessory can be mounted in deep service distribution ducting or a shallow accessory can be mounted in shallow service distribution ducting. Finally, the accessory mounting 1 can be engaged with service distribution ducting via the engaging means 14, 15, in a manner known in the art.

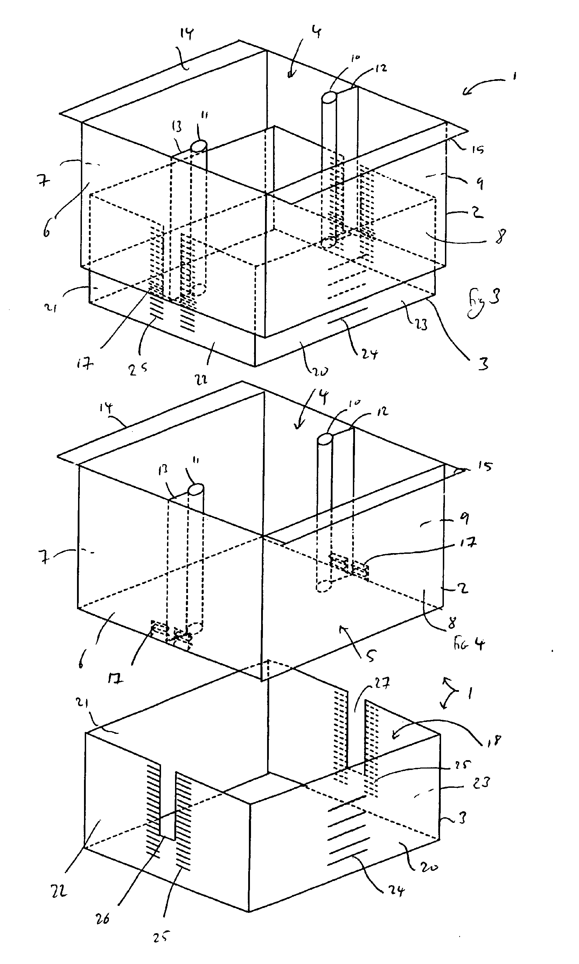

Figures 3 and 4 show a second accessory mounting. The features thereof are exactly the same as the features of figures 1 and 2, except that the enclosed space is smaller in the longitudinal direction. The accessory mounting 1 is suitable for accommodating a pair of accessory mountings, for example electrical sockets. The mounting shown in figures 3 and 4 is suitable for mounting a single accessory. Similar features are similarly numbered in figures 3 and 4 as in figures 2 and 1.

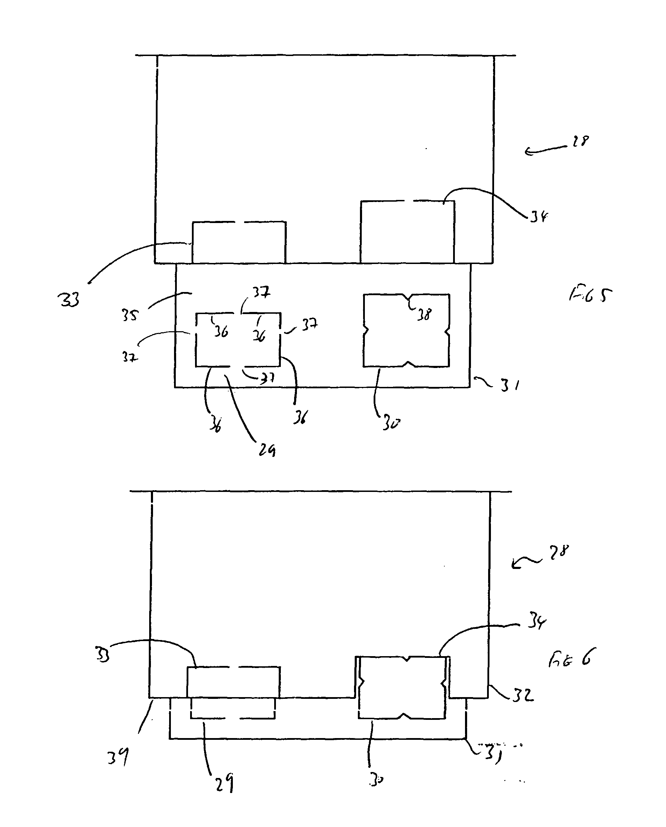

Figures 5 and 6 are sketch end views of a third accessory mounting. This accessory mounting, generally designated 28 is substantially the same as that shown in figures 1 and 2 or figures 3 and 4 and details thereof will not be described further. However, the accessory mounting 28 further comprises a pair of knock-out portions 29 and 30 in the second mounting part 31 and a pair of partial knock-out portion 33 and 34 in the first mounting part 32. The knock-out portions 29 and 30 are of different size. The first knock-out portion 29 is shown in position. It comprises a region of the wall 35 of the second part 31 separated from the rest of the wall by slits 36. Narrow connecting portions 37 connect the knock-out portion 29 to the rest of the surface 35. The second knock-out portion has already been removed leaving burrs 38 corresponding to the connecting portions 38 which formerly connected the knock-out portion to the surface 35.

Figure 5 shows the accessory mounting 28 with the second mounting part 31 in the extended position. It can be seen that the knock-out portions 29 and 30 are completely accessible, allowing a user to remove the knock-out portion 29 or 30 as required to allow access by cables or conductors to an accessory mounted in the box 28.

Figure 6 shows the accessory mounting 28 with the second mounting part 31 in the retracted position. It can be seen that the lower edge 39 of the first mounting part 32 partially obscures the top part of the knock-out portions 29 and 30. For this reason, the partial knock-out portions 34 and 33 are provided. The knock-out portion 34 is shown as removed. It can be seen that when the partial knock-out portion 34 is removed, the knock-out portion 30 is substantially completely accessible.

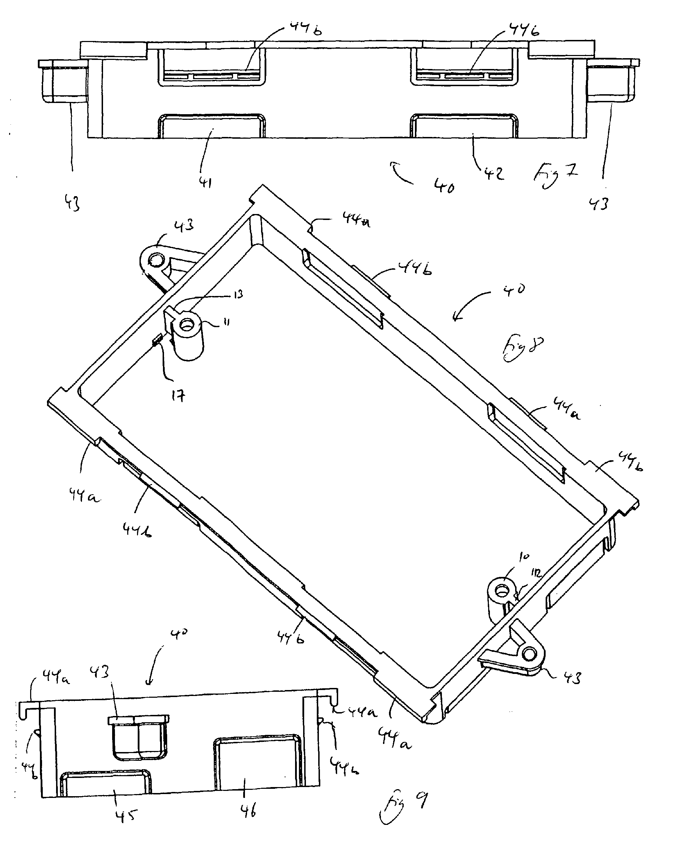

Figures 7-9 show views of a first mounting part . The first mounting part 40 operates in the same way as the accessory mounting 2 of figures 1 and 2. Like features of the mounting part 40 are similarly numbered in figures 7-9 as in figures 1 and 2. It should be noted that a plurality of knock-out portions are provided. There are knock out portions 41 and 42 in the side wall members of the mounting part. Engagement Structures 43 are provided at each end of the mounting part. These are provided with a screw hole allowing a structure such as engagement means for engaging with a particular design of trunking or cover plate to be screwed in position with respect to the accessory mounting. Additional service distribution ducting engaging means 44 are provided at the top of the first mounting part. These are of a design which is well known in its own right in the art, and comprises hooks and 44a and resiliently mounted tongues 446.

Knock-out portion 45 and 46 are provided at the ends of the mounting part 40. It can be seen that the knock-out portion 45 is smaller than the knock-out portion 46, due to the presence of the engaging structure 43.

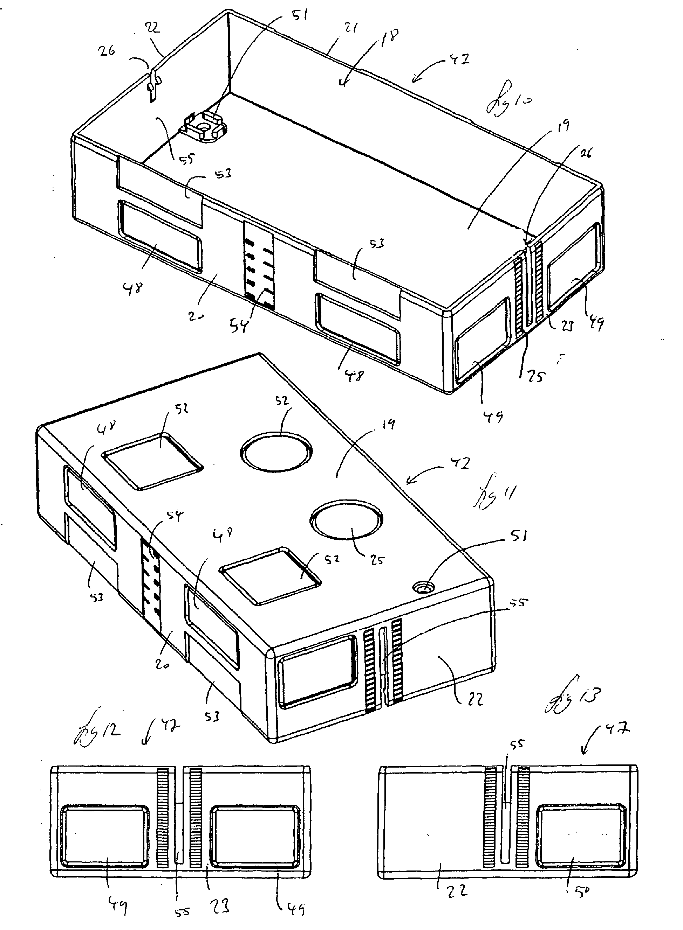

Figures 10-13 show views of a second mounting part, engagable with the first mounting part of figures 7-9, according to a fourth accessory mounting. In principle, the second mounting part of figures 10-13 is similar to the second mounting part 3 of figures 1-2 and similar parts are similarly numbered. It can be seen that knock-out portions 48 are provided in the sides of the mounting part. Further knock-out portions 49 are provided in one end of the mounting part and a single knock-out portion 50 is provided in the opposite end. A housing for an earth engagement terminal of known design 51 is provided in the base 19 of the mounting part. It can be seen that part of the wall member 22 which corresponds to the position of the housing 51 has no knock-out portion, because there would be no space.

Knock-out portions 52 are also provided in the base 19. Cut away portions are provided in the wall members 20 and 21, of reduced thickness. These are provided in order to allow the resilient tongues 44b of the first mounting part 40 to flex inwards to engage service provision ducting, when the second mounting part 47 is fully retracted into the first mounting part.

Depth marks 54 are provided in the wall member 20.

It can be seen that the slots 26 for engaging around the connecting members 11 and 13 of the screw posts 10 and 11 are closed at the bottom by a thin wall 55. This is to allow the surface area of the inside of the accessory mounting to be coated to the greatest possible extent with electromagnetic screening material, if desired. In order to allow the second mounting part 47 to be completely received into the first mounting part 40, it will be necessary for an installer to cut away the thin wall 55 using a tool such as a knife.

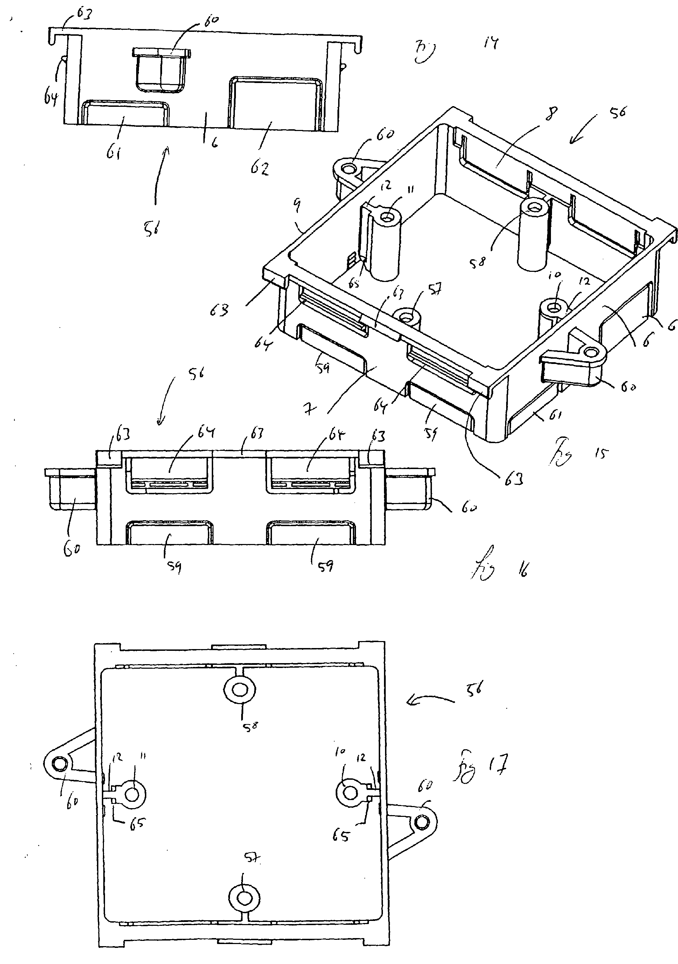

Figures 14-17 show views of the first mounting part 56 of a fifth accessory mounting. It corresponds in design generally to the first mounting part 2 of figures 3-4, described above, and similar parts are similarly numbered. It should be noted, however, that there are an additional two screw posts for engaging with an accessory, along the wall members 7 and 8. It can be seen that partial knock out portions 59 are formed inside wall members 7 and 8 extending down to the edge to coordinate with knock-out portions in the second mounting part, to be described further below. The Engaging structures 60 are provided for engagement with a further structure, for example a face plate, cover plate accessory or structure for engaging service provision ducting. Knock-out portions 61 and 62 are provided in the end walls 9 and 6 It can be seen that the knock-out portion 61 is smaller than the knock-out portion 62 because of the presence of the engagement structure 60.

Means for engaging the trunking comprising a hook 63 and a resiliently mounted tongue 64 of known design are provided at the top of the wall members of the accessory mounting part.

Also visible in figures 17 and 15 is a retaining hook 65 on the screw posts 10 and 11 whose function will be described further below.

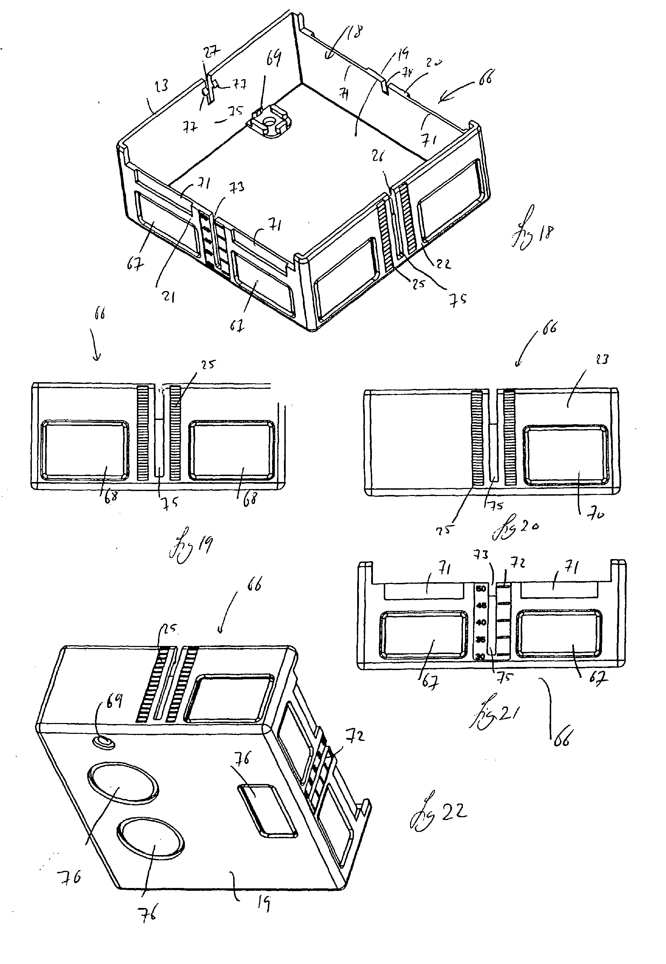

Figures 18-22 shows views of the second mounting part 3 of the fifth accessory mounting, for engagement with the first mounting part 56 of figures 14-17. The second mounting part 66 corresponds in design to the second mounting part 3 of figures 3 and 4 and similar parts are similarly numbered.

Knock-out portion 67 are provided in the wall members 21 and 20. Knock-out portions 68 are provided in the wall member 22. A housing for an earth engaging structure 69 of a standard design is provided in the base 19. A knock-out portion 70 is formed in the wall 63, but there is no knock-out portion at the position adjacent the earth engaging structure 69.

Cut away portions 71 are provided at the tops of the side walls 21 and 20 to allow the resilient tongues 64 of the first mounting part shown in figures 14-17 to flex inwards when the second mounting part is fully drawn into the first mounting part.

Depth marks 72 are provided on the side walls 20 and 21.
In addition to the slots 26 and 27 for engaging around the connecting members 12 and 13 of the screw posts 10 and 11, there are slots 73 and 74 in the side wall members 20 and 21, to engage around connecting members of the additional screw posts 57 and 58 of the first mounting part shown in figures 14-17.

Each of the slots 26, 27, 73, 74 is partially closed at its bottom end by a thin wall 75. The thin wall 75 provides a continuous surface on the inside of the mounting part 66 on which EMC material may be deposited. However, if it is desired to telescope the second mounting part fully into the first mounting part, the thin wall 75 may be cut away relatively easily using a knife or similar implement.

Knock-out portions 76 are provided in the base 19. In figure 18, a pair of projections 77 can be seen adjacent to slot 27, whose purpose will be described further below.

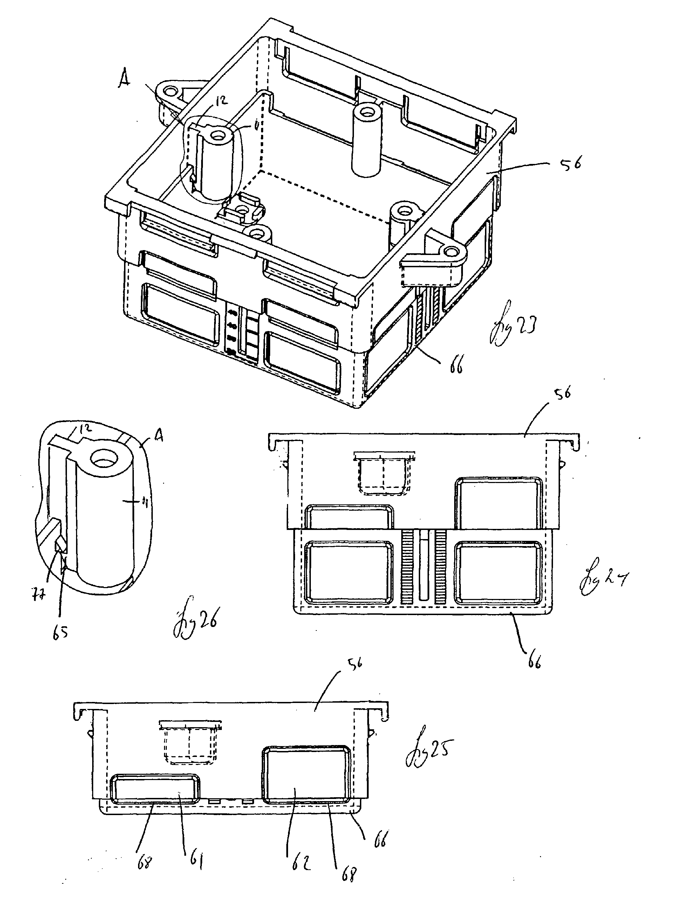

Figures 23-25 show views of the first mounting part 56 of figures 14-17 engaged with the second mounting part 66 of figures 18-22. Figure 24 and 23 show the mounting parts 56 and 66 at their position of maximum depth. Figure 25 shows the second mounting part fully telescoped into the second mounting part. It can be seen that the knock-out portions 61 and 62 of the first mounting part 56 coincide with the knock-out portions 68 of the second mounting part so that, in order to provide access for cables from service provision ducting to the interior of the accessory mounting, both sets of the knock-out portions can be removed.

Figure 26 is a view at enlarged scale of the screw post 11 and connecting means 12, showing how the projection 65 of the screw post 11 engages with the projection 77 of the second mounting part 66. This is to prevent accidental separation of the mounting parts. Assembly of the mounting parts 56 and 66 together is permitted because the projections 65 and 77 each comprise bevelled surfaces which will ride over one another in the insertion direction but they comprise catching surfaces which will prevent the first and second mounting part being separated from one another.
The present invention has been described above by way of example only and modifications can be made within the scope of the invention as defined by the claims.

## Claims

1. A method of manufacturing an accessory mounting, the accessory mounting (1, 28, 58) being of the type for use in service distribution ducting, the method comprising the following steps :
providing a first mounting part (2) having a first opening (4) and a second opening (5) and wall members (6,7,8,9) extending between the first and second openings (4,5), defining a first enclosed volume,
the first mounting part (2) further comprising means (14,15)adjacent the first opening (4) for engaging service distribution ducting and means (10,11) for engaging an accessory, to thereby fix the accessory in the service distribution ducting,
providing a second mounting part (3), having an opening (18) and walls (20,21,22,23) extending from the opening to define a second enclosed volume, wherein the walls (20,21,22,23) and opening (18) of the second mounting part are receivable in the second opening (5) of the first mounting part (2), or the walls (6,7,8,9) and the second opening (5) of the first mounting part are receivable in the opening (18) of the second mounting part (3), so that the first and second enclosed volumes are in communication,
the second mounting part (3) being movable with respect to the first mounting part (2) so that the distance between the second mounting part (3) and the first opening (4) is variable, **characterised in that** the second mounting part (3) is provided for substantially enclosing the bottom of the accessory, and a ratchet mechanism (16,17,18) is provided between the first mounting part (2) and the second mounting part (3), and **in that** the method comprises manufacturing the first mounting part (2) and the second mounting part (3), separately, from thermoplastic material by molding, forming or casting at an elevated temperature, allowing the first and second mounting parts to cool to a temperature which is above ambient temperature, assembling the first and second mounting parts together and allowing the accessory mounting to cool to ambient temperature,

2. A method according to claim 1, wherein the first mounting part (2) comprises at least one sliding surface (6, 7,8,9) and the second mounting part (3) comprises a corresponding sliding surface (20,21,22,23) for sliding contact with the sliding surface of the first mounting part.

3. A method according to claim 2, wherein the sliding surfaces comprise at least one wall (6, 7,8,9) of the first mounting part and at least one wall (20,21,22,23) of the second mounting part.

4. A method according to any preceding claim, wherein the means (10,11) of the first mounting part for engaging an accessory comprises at least one scew engaging structure located at a position displaced from an adjacent wall member (69) and joined to the adjacent wall member by connecting means (12,13), the adjacent wall member comprising a flat planar wall, the second mounting part comprising a corresponding flat planar wall (22,23) slidably mounted with respect to the flat planar wall (6,9) of the first mounting part (2), a longitudinally extending slot (27) being formed in the flat wall of the second mounting part at a point which corresponds to the mounting means (10,11).

5. A method according to any preceding claim, wherein the second mounting part (3) comprises at least one knock-out portion (29,30), a corresponding second knock-out portion (33,34) being provided in a part of the first mounting part (2) which coincides with the knock-out portion of the second part when the second mounting part (3) is in a retracted position in the first mounting part.

6. A method according to any preceding claim, wherein the first and second mounting parts (2,3) each comprise at least one stop surface, for preventing movement of the first and second parts with respect to one another beyond a predetermined amount.

## Patentansprüche

1. Verfahren zum Herstellen einer Zubehörhalterung, wobei die Zubehörhalterung (1, 28, 58) von der Art für eine Verwendung in einer Dienstverteilungsleitungsführung ist, wobei das Verfahren die folgenden Schritte umfasst:
Bereitstellen eines ersten Halterungsteils (2), das eine erste Öffnung (4) und eine zweite Öffnung (5) und sich zwischen der ersten und der zweiten Öffnung (4, 5) erstreckende Wandelemente (6, 7, 8, 9), die einen ersten umschlossenen Raum definieren, hat,
wobei das erste Halterungsteil (2) ferner angrenzend an die erste Öffnung (4) Mittel (14, 15), um eine Dienstverteilungsleitungsführung in Eingriff zu nehmen, und Mittel (10, 11), um ein Zubehörteil in Eingriff zu nehmen, Bereitstellen eines zweiten Halterungsteils (3), das eine Öffnung (18) und Wände (20, 21, 22, 23), umfasst, um **dadurch** das Zubehörteil in der Dienstverteilungsleitungsführung zu befestigen,
die sich von der Öffnung aus erstrecken, hat, um einen zweiten umschlossenen Raum zu definieren, wobei die Wände (20, 21, 22, 23) und die Öffnung (18) des zweiten Halterungsteils in der zweiten Öffnung (5) des ersten Halterungsteils (2) aufgenommen werden können oder die Wände (6, 7, 8, 9) und die zweite Öffnung (5) des ersten Halterungsteils in der Öffnung (18) des zweiten Halterungsteils (3) aufgenommen werden können, so dass der erste und der zweite umschlossene Raum in Verbindung stehen,
wobei das zweite Halterungsteil (3) in Bezug auf das erste Halterungsteil (2) bewegt werden kann, so dass der Abstand zwischen dem zweiten Halterungsteil (3) und der ersten Öffnung (4) veränderlich ist, **dadurch gekennzeichnet, dass** das zweite Halterungsteil (3) dafür bereitgestellt wird, im Wesentlichen den Unterteil des Zubehörteils zu umschließen, und ein Ratschenmechanismus (16, 17, 18) zwischen dem ersten Halterungsteil (2) und dem zweiten Halterungsteil (3) bereitgestellt wird, und **dadurch**, dass das Verfahren umfasst, das erste Halterungsteil (2) und das zweite Halterungsteil (3), gesondert, aus einem thermoplastischen Werkstoff durch Formen, Umformen oder Gießen bei einer erhöhten Temperatur herzustellen, zu ermöglichen, dass das erste und das zweite Halterungsteil bis zu einer Temperatur, die über der Umgebungstemperatur liegt, abkühlen, das erste und das zweite Halterungsteil zusammenzubauen und zu ermöglichen, dass die Zubehörhalterung bis zu der Umgebungstemperatur abkühlt.

2. Verfahren nach Anspruch 1, wobei das erste Halterungsteil (2) wenigstens eine Gleitfläche (6, 7, 8, 9) umfasst und das zweite Halterungsteil (3) eine entsprechende Gleitfläche (20, 21, 22, 23) für eine Gleitberührung mit der Gleitfläche des ersten Halterungsteils umfasst.

3. Verfahren nach Anspruch 2, wobei die Gleitflächen wenigstens eine Wand (6, 7, 8, 9) des ersten Halterungsteils und wenigstens eine Wand (20, 21, 22, 23) des zweiten Halterungsteils umfassen.

4. Verfahren nach einem der vorhergehenden Ansprüche, wobei das Mittel (10, 11) des ersten Halterungsteils, um ein Zubehörteil in Eingriff zu nehmen, wenigstens eine Schraube umfasst, die eine Struktur in Eingriff nimmt, die an einer Position, die gegenüber einem angrenzenden Wandelement (69) versetzt ist, angeordnet ist und durch Verbindungsmittel (12, 13) mit dem angrenzenden Wandelement verbunden ist, wobei das angrenzende Wandelement eine flache ebene Wand umfasst, wobei des zweite Halterungsteil eine entsprechende flache ebene Wand (22, 23) umfasst, die verschiebbar in Bezug auf die flache ebene Wand (6, 9) des ersten Halterungsteils (2) angebracht ist, wobei an einem Punkt, der dem Halterungsmittel (10, 11) entspricht, ein sich in Längsrichtung erstreckender Schlitz (27) in der flachen Wand des zweiten Halterungsteils geformt ist.

5. Verfahren nach einem der vorhergehenden Ansprüche, wobei das zweite Halterungsteil (3) wenigstens einen Ausbrechabschnitt (29, 30) umfasst, wobei ein entsprechender zweiter Ausbrechabschnitt (33, 34) in einem Teil des ersten Halterungsteils (2) bereitgestellt wird, der mit dem Ausbrechabschnitt des zweiten Teils übereinstimmt, wenn sich das zweite Halterungsteil (3) in einer eingezogenen Stellung in dem ersten Halterungsteil befindet.

6. Verfahren nach einem der vorhergehenden Ansprüche, wobei das erste und das zweite Halterungsteil (2, 3) jeweils wenigstens eine Anschlagfläche umfassen, um eine Bewegung des ersten und des zweiten Teils in Bezug aufeinander über ein vorbestimmtes Ausmaß hinaus zu verhindern.

## Revendications

1. Procédé de fabrication d'un support de montage pour accessoires, le support de montage pour accessoires (1, 28, 58) étant du type destiné à être utilisé dans des gaines de distribution de services, le procédé comprenant les étapes ci-dessous :
fourniture d'une première partie du support de montage (2), comportant une première ouverture (4) et une deuxième ouverture (5), et des éléments de paroi (6, 7, 8, 9) s'étendant entre les première et deuxième ouvertures (4, 5), définissant un premier volume renfermé ;
la première partie du support de montage (2) comprenant en outre un moyen (14, 15) adjacent à la première ouverture (4), destiné à s'engager dans la gaine de distribution de services, et un moyen (10, 11) destiné à s'engager dans un accessoire, pour fixer ainsi l'accessoire dans la gaine de distribution de services ;
fourniture d'une deuxième partie du support de montage (3), comportant une ouverture (18) et des parois (20, 21, 22, 23) s'étendant à partir de l'ouverture pour définir un deuxième volume renfermé, les parois (20, 21, 22, 23) et l'ouverture (18) de la deuxième partie du support de montage pouvant être reçues dans la deuxième ouverture (5) de la première partie du support de montage (2), ou bien les parois (6, 7, 8, 9) et la deuxième ouverture (5) de la première partie du support de montage pouvant être reçues dans l'ouverture (18) de la deuxième partie du support de montage (3), de sorte à établir une communication entre les premier et deuxième volumes renfermés ;
la deuxième partie du support de montage (3) pouvant être déplacée par rapport à la première partie du support de montage (2), de sorte que la distance entre la deuxième partie du support de montage (3) et la première ouverture (4) est variable, **caractérisé en ce que** la deuxième partie du support de montage (3) sert à renfermer pratiquement la partie inférieure de l'accessoire, un mécanisme à cliquet (16, 17, 18) étant agencé entre la première partie du support de montage (2) et la deuxième partie du support de montage (3), et **en ce que** le procédé comprend les étapes de fabrication de la première partie du support de montage (2) et de la deuxième partie du support de montage (3), de manière séparée, à partir d'un matériau thermoplastique, par moulage, formage ou coulée en présence d'une température élevée, de refroidissement des première et deuxième parties du support de montage à une température supérieure à la température ambiante, d'assemblage des première et deuxième parties du support de montage et de refroidissement du support de montage d'accessoires à la température ambiante.

2. Procédé selon la revendication 1, dans lequel la première partie du support de montage (2) comprend au moins une surface coulissante (6, 7, 8, 9), la deuxième partie du support de montage (3) comprenant une surface coulissante correspondante (20, 21, 22, 23), en vue d'établir un contact coulissant avec la surface coulissante de la première partie du support de montage.

3. Procédé selon la revendication 2, dans lequel les surfaces coulissantes comprennent au moins une paroi (6, 7, 8, 9) de la première partie du support de montage et au moins une paroi (20, 21, 22, 23) de la deuxième partie du support de montage.

4. Procédé selon l'une quelconque des revendications précédentes, dans lequel le moyen (10, 11) de la première partie du support de montage destiné à s'engager dans un accessoire comprend au moins une structure d'engagement à vis agencée au niveau d'une position déplacée par rapport à un élément de paroi adjacent (69) et reliée à l'élément de paroi adjacent par un moyen de connexion (12, 13), l'élément de paroi adjacent comprenant une paroi plane plate, la deuxième partie du support de montage comprenant une paroi plane plate correspondante (22, 23) montée de manière coulissante par rapport à la paroi plane plate (6, 9) de la première partie du support de montage (2), une fente à extension longitudinale (27) étant formée dans la paroi plate de la deuxième partie du support de montage au niveau d'un point correspondant au moyen de montage (10, 11).

5. Procédé selon l'une quelconque des revendications précédentes, dans lequel la deuxième partie du support de montage (3) comprend au moins une partie défonçable (29, 30), une deuxième partie défonçable correspondante (33, 34) étant agencée dans une partie de la première partie du support de montage (2), coïncidant avec la partie défonçable de la deuxième partie lorsque la deuxième partie du moyen de montage (3) se trouve dans une position rétractée dans la première partie du support de montage.

6. Procédé selon l'une quelconque des revendications précédentes, dans lequel les première et deuxième parties du support de montage (2, 3) comprennent chacune au moins une surface d'arrêt, pour empêcher un déplacement mutuel des première et deuxième parties au-delà d'une distance prédéterminée.
